# EUROPÄISCHE PATENTSCHRIFT

(11) **EP 1 836 024 B1**
(45) Veröffentlichungstag und Bekanntmachung des Hinweises auf die Patenterteilung: **27.01.2010**
(21) Anmeldenummer: 05819990.2
(22) Anmeldetag: 15.12.2005
(51) Int. Cl.: B23Q 5/04, B23Q 1/54, B23Q 3/157, B23Q 16/02

(54) **VERSTELLBARES WERKZEUGAGGREGAT**
ADJUSTABLE TOOL UNIT
ENSEMBLE D'OUTILS REGLABLE

(30) Priorität: 23.12.2004 DE 102004062138
(43) Veröffentlichungstag der Anmeldung: 26.09.2007
(73) Patentinhaber: Benz GmbH, Werkzeugsysteme, 77716 Haslach i.K. (DE)
(72) Erfinder: ZELLER, Christoph, 77756 Hausach (DE)
(74) Vertreter: Thämer, Wolfgang
(86) Internationale Anmeldenummer: PCT/EP2005/013498
(87) Internationale Veröffentlichungsnummer: WO 2006/069637

(56) Entgegenhaltungen:
- EP-A- 1 153 709
- EP-A- 1 316 385
- US-A- 5 996 329
- US-A1- 2001 046 423

## Beschreibung

Die Erfindung bezieht sich auf eine Vorrichtung zur Halterung von einem oder mehreren Werkzeugen, mittels denen ein Werkstück in unterschiedlichen Winkelstellungen und Lagen der Werkzeuge mittels diesen bearbeitbar ist, wobei die Vorrichtung als auswechselbares Werkzeugaggregat ausgebildet ist, das an der Spindel einer Werkzeugmaschine anbringbar ist und eine Werkzeugaufnahme für die Werkzeuge aufweist, die durch die Spindel über Getriebeglieder antreibbar und um deren Längsachse verdrehbar und gegenüber dieser verschwenkbar ist.

Durch die DE 101 58 898 C1 ist ein einwechselbares Werkzeugaggregat dieser Art bekannt. Mit dieser Vorrichtung ist es zwar möglich, die eingespannten Werkzeuge derart zu verstellen, dass ein Werkstück mittels Bohrern, Fräsern oder ähnlichen Werkzeugen an vier Seitenflächen bearbeitet werden kann, der Bauaufwand, um dies zu bewerkstelligen, ist aber erheblich. Dem Werkzeugaggregat ist nämlich bei dieser Ausgestaltung ein gesondertes Verstellteil zugeordnet, das im Wechsel mit einem Trägerteil, an dem die Werkzeugaufnahme angebracht ist, oder mit einem Werkzeugmaschinenteil drehfest verbindbar ist. Da insbesondere bei der Bearbeitung von aus Holz bestehenden Werkstücken Schmutz anfällt und dieser zwischen diese Bauteile gelangen kann, ist eine störungsfreie Funktion oftmals nicht gegeben. Auch bedingen die Verstellbewegungen einen gewissen Zeitaufwand, so dass das bekannte Werkzeugaggregat trotz eines hohen konstruktiven und damit finanziellen Aufwandes den Anforderungen vielfach nicht genügt.

Durch die WO 02/26438 A2 ist es des Weiteren bekannt, ein Werkzeugaggregat und eine Werkzeugaufnahme mittels getrennten Direktantrieben zu steuern. Ferner offenbart die DE 695 25 504 T2 eine automatische Werkzeugwechselvorrichtung, bei der verschiedene Funktionen einer Werkzeugmaschine mittels eines wechselweise trieblich verbindbaren Motors zu betreiben sind.

Aus der US 5,996,329 A ist ein weiteres Werkzeugaggregat mit zwei separaten Schwenkachsen nach dem Oberbegriff von Anspunch 1 bekannt, wobei jede Schwenkachse ihren eigenen Antrieb aufweist.

Ferner ist aus der EP 1 153 709 A2 ein Zusatzwerkzeug für eine Fräsmaschine bekannt, bei der eine Schwenkachse durch ein Umkuppeln mit Hilfe des Hauptspindelantriebs verstellt wird. Dazu wird zunächst die regulär drehsteife Verbindung zwischen dem Zusatzwerkzeug und der Fräsmaschine gelöst, um dann das Zusatzwerkzeug an die Hauptspindel anzukuppeln. Nach einer erfolgten Schwenkbewegung des Zusatzwerkzeuges wird die Hauptspindel wieder von diesem abgekuppelt und das Zusatzwerkzeug an der Fräsmaschine drehsteif festgeklemmt.

Aufgabe der Erfindung ist es daher, eine Vorrichtung zur Aufnahme von Werkzeugen nach Art eines auswechselbaren Werkzeugaggregates der vorgenannten Gattung zu schaffen, das einfach in seinem konstruktiven Aufbau und damit wirtschaftlich herstellbar ist, das aber eine störungsfreie Funktion über einen langen Zeitraum ermöglicht. Vor allem soll erreicht werden, dass eine kurzfristige Verstellung der Werkzeuge in die jeweils erforderliche Position vorzunehmen ist, so dass Nebenzeiten kurz gehalten werden und eine kostengünstige Bearbeitung von Werkstücken gewährleistet ist.

Gemäß der Erfindung wird dies mit einer Vorrichtung der eingangs genannten Art dadurch erreicht, dass das Werkzeugaggregat oder die Werkzeugaufnahme mittels eines diesen gemeinsamen und gesondert einschaltbaren Servomotors wahlweise verstellbar sind, der zur Verdrehung des Werkzeugaggregates oder zur Verschwenkung der Werkzeugaufnahme wechselweise mit diesen trieblich verbindbar ist.

Der Servomotor ist auf oder in einem scheibenartig ausgebildeten ortsfesten Gehäuse angeordnet, das auf der Spindel der Werkzeugmaschine unmittelbar oder über Zwischenglieder drehbar abgestützt ist. Zur Verdrehung des Werkzeugaggregates ist eine mit diesem beispielsweise über einen Stift fest verbundene und vorzugsweise in dem Gehäuse angeordnete Scheibe vorgesehen, die wahlweise mit dem Servomotor trieblich verbindbar ist. Zur trieblichen Verbindung des Servomotors mit der Scheibe oder der Schneckenwelle sind auf dessen Abtriebswelle zwei gemeinsam axial verschiebbare Zahnräder angeordnet, die wechselweise in einen an der Scheibe angebrachten Zahnkranz oder in ein auf der Schneckenwelle vorgesehenes Ritzel koppelbar sind.

Die Scheibe kann über miteinander koppel bare Zahnräder mit dem Servormotor verbunden werden.

Zur Verschwenkung der Werkzeugaufnahme kann dagegen ein in dem Werkzeugaggregat angeordneter und durch den Servomotor wahlweise antreibbarer Schneckentrieb vorgesehen werden, dessen Schnecke mit dem Servomotor und dessen Schneckenrad mit der Werkzeugaufnahme trieblich verbindbar sind.

Zur wechselweisen trieblichen Verbindung des Servomotors mit der Scheibe oder der Schnecke kann auch dem Servomotor eine Wechsel kupplung nachgeschaltet sein, mittels der unmittelbar oder über Zwischenglieder das Werkzeugaggregat oder die Werkzeugaufnahme mit dem Servomotor trieblich verbindbar sind.

Wird ein auf einer Werkzeugmaschine anzubringendes Werkzeugaggregat gemäß der Erfindung ausgebildet, so ist es möglich, die in diesem eingespannten Werkzeuge in kurzer Zeit in die zu der jeweiligen Bearbeitung vorgesehene Position zu verstellen, und zwar unabhängig von dem über die Spindel der Werkzeugmaschine erfolgten Antrieb der Werkzeugaufnahme. Mittels des Servomotors kann nämlich wahlweise das Werkzeugaggregat um die Längsachse der Spindel verdreht oder die Werkzeugaufnahme kann gegenüber deren Längsachse nahezu in jede beliebige Winkellage verschwenkt werden, so dass ein Werkstück nicht nur auf allen vier Seiten mit Bohrungen, sondern auch mit Einfräsungen, z.B. Gehrungskanten, versehen werden kann.

Der dazu erforderliche Bauaufwand ist gegenüber der bekannten Vorrichtung geringer, da, um die Verstellbewegungen ausführen zu können, der gesonderte Servomotor nur wechselweise mit dem Werkzeugaggregat oder mit der Werkzeugaufnahme trieblich zu verbinden ist. Und mit Hilfe des steuerbaren Servomotors ist jeweils ein rasches und präzises Positionieren der Werkzeuge ohne Schwierigkeiten vorzunehmen, so dass bei einer Vielfachbearbeitung eines Werkstückes eine erhebliche Zeiteinsparung zu erzielen und demnach eine wirtschaftliche Bearbeitung gegeben ist.

In der Zeichnung ist ein Ausführungsbeispiel einer in Form eines auswechselbaren Werkzeugaggregates ausgebildeten Vorrichtung zur Halterung von Werkzeugen dargestellt und nachfolgend im Einzelnen erläutert:
Hierbei zeigt, jeweils in Vorderansicht und teilweise im Schnitt:
Figur 1 die Vorrichtung in einer zur Verdrehung des Werkzeugaggregates erforderlichen Betriebsstellung,
Figur 2 die Vorrichtung nach Figur 1 mit in dem Werkzeugaggregat angeordneten Getriebegliedern zur Übertragung der Antriebsenergie auf die eingespannten Werkzeuge,
Figur 3 die Vorrichtung nach Figur 1 mit einem Schneckentrieb, mittels dem die Werkzeugaufnahme verschwenkbar ist, und
Figur 4 die Vorrichtung nach Figur 3 mit einer dem Antriebsmotor des Werkzeugaggregates nachgeschalten Wechselkupplung.

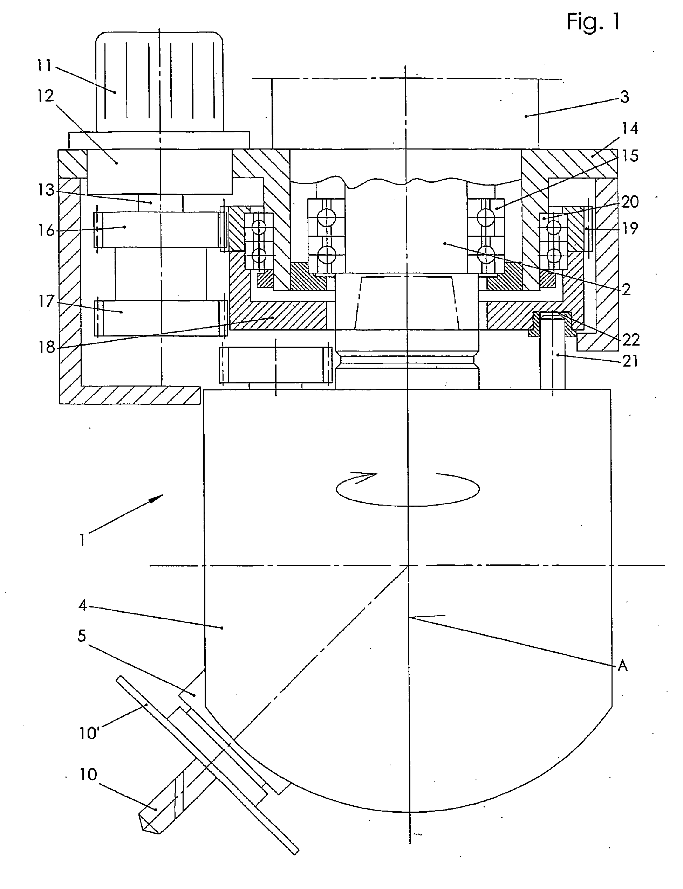

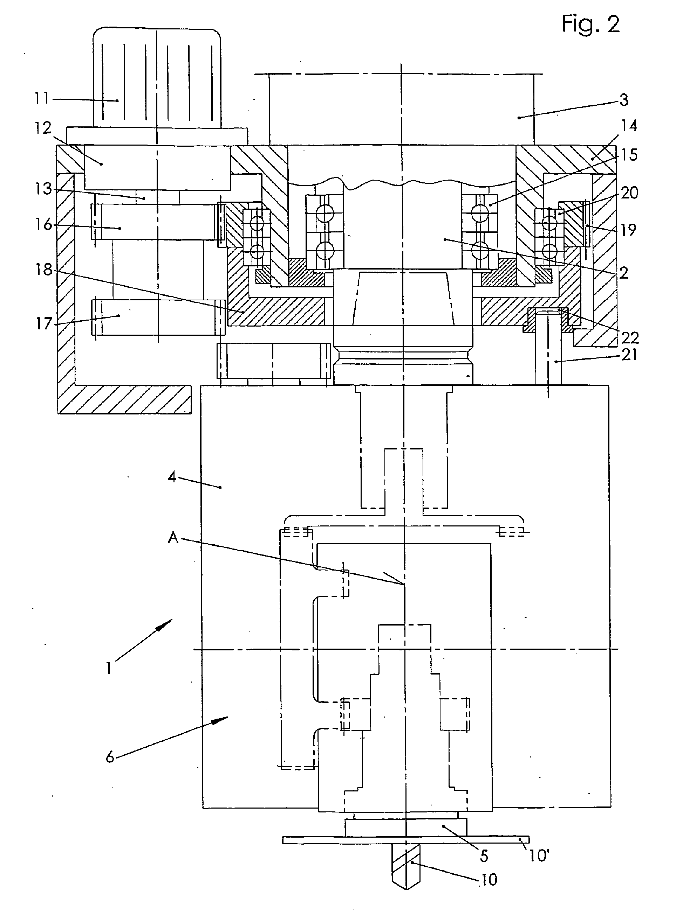

Die in den Figuren 1 bis 4 dargestellte und jeweils mit 1 bezeichnete Vorrichtung dient zur Halterung von einem oder mehreren z.B. als Bohrer 10 oder als Sägeblatt 10' ausgebildeten in einer Werkzeugaufnahme 5 eingesetzten Werkzeugen, mittels denen Werkstücke vielseitig zu bearbeiten sind, und ist in Form eines Werkzeugaggregates 4 ausgebildet, das auswechselbar an einer von einem Gehäuse 3 umgebenen Spindel 2 einer Werkzeugmaschine zu befestigen ist. Über Getriebeglieder 6, wie dies schematisch in Figur 2 dargestellt ist, ist die Werkzeugaufnahme 5 und damit die in diese eingespannten Werkzeuge 10 und 10' antreibbar.

Die Werkzeugaufnahme 5 ist unabhängig von deren Antriebsgliedern um die Längsachse A der Spindel 2 verdrehbar und auch gegenüber dieser um einen wählbaren Winkel α stufenlos verschwenkbar. Um dies zu bewerkstelligen, ist ein gesonderter Servomotor 11 vorgesehen, der wahlweise mit dem Werkzeugaggregat 4, um dieses zu verdrehen, oder mit der Werkzeugaufnahme 5, um diese zu verschwenken, trieblich verbunden werden kann. Die Werkzeuge 10 und/oder 10' können somit derart verstellt werden, dass aufgespannte Werkstücke an allen vier Stirnseiten bearbeitet werden können.

Zur Verdrehung des Werkzeugaggregates 4 wird dieses mit einem auf der Abtriebswelle 13 des mit einem Untersetzungsgetriebe 12 ausgestatteten Servomotors 11 angeordneten Zahnrad 16 trieblich verbunden. Dazu dient eine in einem Gehäuse 14, das mittels eines Wälzlagers 15 auf der Spindel 2 gehalten ist, angeordnete und mittels eines weiteren Wälzlagers 20 in dem Gehäuse 14 drehbar gelagerte Scheibe 18, die über einen Zahnkranz 19 mit dem Zahnrad 16 und über einen Stift 21, der in eine in der Scheibe 18 vorgesehene Ausnehmung 22 eingreift, mit dem Werkzeugaggregat 4 trieblich verbunden ist. Wird der Servomotor 11 eingeschaltet, kann somit das Werkzeugaggregat 4 um vorgegebene Winkelgrade um die Achse A verdreht und die Werkzeuge 10, 10' können entsprechend ausgerichtet und eingestellt werden.

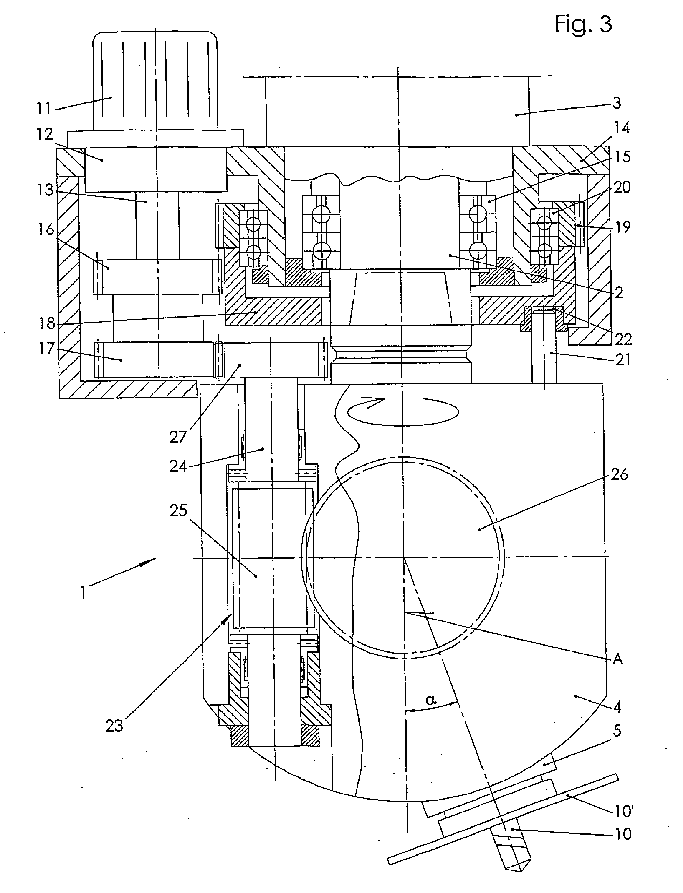

Zum Verschwenken der Werkzeugaufnahme 5 ist, wie dies in Figur 3 gezeigt ist, die Triebverbindung zwischen dem Zahnrad 16 und dem Zahnkranz 19 zu lösen und ein Weiteres auf der Abtriebswelle 13 des Servomotors 11 angeordnetes Zahnrad 17 ist mit einem Ritzel 27 zu verbinden, über das ein in dem Werkzeugaggregat 4 eingebauter Schneckentrieb 23 aktiviert wird. Das Endkoppeln des Zahnrades 16 und das Einkoppeln des Zahnrades 17 kann z.B. durch gemeinsames Verschieben beider Zahnräder 16 und 17 bewerkstelligt werden. Das Ritzel 27 ist auf einer Schneckenwelle 24 einer Schnecke 25 angeordnet, die mit einem Schneckenrad 26 in Eingriff ist. Das Schneckenrad 26 wiederum ist mit der Werkzeugaufnahme 5 drehfest verbunden, so dass durch eine Verdrehung des Schneckenrades 26 die Werkzeugaufnahme 5 mehr oder weniger um den Mittelpunkt des Schneckenrades 26 um den Winkel α verschwenkt wird und somit die Werkzeuge 10, 10' entsprechend ausgerichtet werden können.

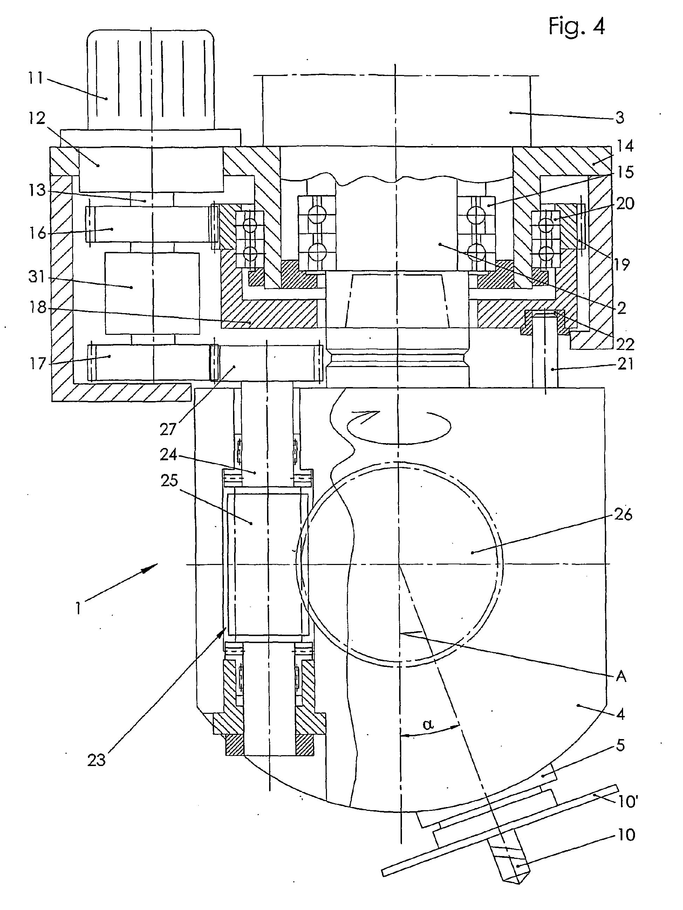

Alternativ ist es auch möglich, wie dies in Figur 4 gezeigt ist, dem Servomotor 11 eine schaltbare Wechselkupplung 31 zuzuordnen. Auf diese Weise kann ebenfalls das Werkzeugaggregat 4 über die Scheibe 18 angetrieben und um die Achse A verdreht werden oder die Werkzeugaufnahme 5 ist mittels des Schneckentriebes 23 zu verschwenken.

## Patentansprüche

1. Vorrichtung (1) zur Halterung von einem oder mehreren Werkzeugen (10, 10'), mittels denen ein Werkstück in unterschiedlichen Winkelstellungen und Lagen der Werkzeuge (10, 10') bearbeitbar ist, wobei die Vorrichtung (1) als auswechselbares Werkzeugaggregat (4) ausgebildet ist, das an der Spindel (2) einer Werkzeugmaschine anbringbar ist und eine Werkzeugaufnahme (5) für die Werkzeuge (10, 10') aufweist, die durch die Spindel (2) über Getriebeglieder (6) antreibbar und zu deren Längsachse (A) verdrehbar und verschwenkbar ist,
**dadurch gekennzeichnet,**
- **dass** das Werkzeugaggregat (4) und die Werkzeugaufnahme (5) mittels eines diesen gemeinsamen und gesondert einschaltbaren Servomotors (11) wahlweise verstellbar sind, der zur Verdrehung des Werkzeugaggregates (4) oder zur Verschwenkung der Werkzeugaufnahme (5) wechselweise mit diesen trieblich verbindbar ist,
- **dass** der Servomotor (11) auf oder in einem scheibenartig ausgebildeten ortsfesten Gehäuse (14) angeordnet ist, das auf der Spindel (2) der Werkzeugmaschine drehbar abgestützt ist,
- **dass** zur Verdrehung des Werkzeugaggregates (4) eine mit diesem beispielsweise über einen Stift (21) fest verbundene und vorzugsweise in dem Gehäuse (14) angeordnete Scheibe (18) vorgesehen ist, die wahlweise mit dem Servomotor (11) trieblich verbindbar ist und
- **dass** zur trieblichen Verbindung des Servomotors (11) mit der Scheibe (18) oder der Schneckenwelle (24) auf dessen Abtriebswelle (13) zwei gemeinsam axial verschiebbare Zahnräder (16, 17) angeordnet sind, die wechselweise in einen an der Scheibe (18) angebrachten Zahnkranz (19) oder in ein auf der Schneckenwelle (24) vorgesehenes Ritzel (27) koppelbar sind.

2. Vorrichtung nach Anspruch 1,
**dadurch gekennzeichnet,**
**dass** die Scheibe (18) über miteinander koppel bare Zahnräder (16, 17) mit dem Servomotor (11) verbindbar ist.

3. Vorrichtung nach Anspruch t,
**dadurch gekennzeichnet,**
**dass** zur Verschwenkung der Werkzeugaufnahme (5) ein in dem Werkzeugaggregat (4) angeordneter und durch den Servomotor (11) wahlweise antreibbarer Schneckentrieb (23) vorgesehen ist, dessen Schneckenwelle (24) mit dem Servomotor (11) und dessen Schneckenrad (26) mit der Werkzeugaufnahme (5) trieblich verbindbar sind.

4. Vorrichtung nach Anspruch 1,
**dadurch gekennzeichnet,**
**dass** zur wechselweisen Triebverbindung des Servomotors (11) mit dem Werkzeugaggregat (4) oder der Werkzeugaufnahme (5) dem Servomotor (11) eine Wechselkupplung (31) nachgeschaltet ist, mittels der unmittelbar oder über Zwischenglieder das Werkzeugaggregat (4) oder die Werkzeugaufnahme (5) mit dem Servomotor (11) trieblich verbindbar sind.

## Claims

1. Device (1) designed to hold one or several tools (10, 10') used to machine a workpiece at different angular positions and orientations of said tools (10, 10'), whereby said device (1) is a replaceable tool unit (4) that can be mounted on the spindle (2) of a machine-tool and that has a tool holding fixture (5) for said tools (10, 10'), whereby said device (1) can be driven by said spindle (2) through driving elements (6), can rotate and pivot about the longitudinal axis (A) of said spindle (2),
wherein
- said tool unit (4) and said tool holding fixture (5) are movable at option by an actuator (11) that is common to both and that can be started separately, the driving side thereof being connectible with either said tool unit (4) to rotate it, or said tool holding fixture (5) to make it pivot,
- said actuator (11) is disposed on or in a stationary disk-like case (14) that is rollably supported by said spindle (2) of said machine tool,
- a disk (18) designed to rotate said tool holding fixture (4) and permanently linked thereto - possibly via a pin (21) - and preferably disposed in said case (14) is connectible at option to said actuator on its driving side,
- two racks (16, 17), that are together axially movable, are located on the driven shaft (13) of said actuator (11) so as to connect said actuator (11) to said disk (18) or to a worm shaft (24), whereby said racks can be meshed at option in a gear rim (19) affixed on said disk (18) or in a pinion (27) located on said worm shaft (24).

2. Device of claim 1,
wherein
said disk (18) is connectible to said actuator (11) via racks (16, 17) that can mesh in one another.

3. Device of claim 1,
wherein
a worm gear pair (23) drivable at option by said actuator (11) to make said tool holding fixture (5) pivot is disposed in said tool unit (4), whereby said worm shaft (24) of said worm gear unit (23) is connectible on its driving side to said actuator (11), and said worm wheel (26) of said worm gear unit (23) can connect on its driving side to said tool holding unit (5).

4. Device of claim 1,
wherein
a coupling (31) is located after said actuator (11) so as to connect said actuator (11) with either said tool unit (4) or said tool holding unit (5), whereby said coupling (31) enables said tool unit (4) or said tool holding unit (5) to connect directly or via connecting links to said actuator (11) on its driving side.

## Revendications

1. Dispositif (1) de maintien d'un ou plusieurs outils (10, 10') qui servent à usiner une pièce dans différentes positions d'angle et orientations desdits outils (10, 10'), ledit dispositif (1), réalisé sous forme d'un bloc d'outillage amovible (4) susceptible d'être monté sur la broche (2) d'une machine-outil et comprenant une empreinte (5) pour lesdits outils (10, 10'), pouvant être entraîné par ladite broche (2) au moyen d'éléments d'engrenage (6) et pouvant tourner et pivoter autour de l'axe longitudinal (A) de ladite broche (2),
**caractérisé en ce que**
- ledit bloc d'outillage (4) et ladite empreinte (5) se laissent déplacer à volonté au moyen d'un servomoteur (11) qui leur est commun, qui s'allume alternativement et qui peut se connecter en alternance à eux du côté entraînement pour faire tourner le bloc d'outillage (4) ou pour faire pivoter l'empreinte (5),
- ledit servomoteur (11) est placé sur ou dans un carter stationnaire en forme de disque (14) s'appuyant en tournant sur la broche (2) de la machine-outil,
- un disque (18) placé de préférence dans le carter (14) est prévu pour accomplir la rotation du bloc d'outillage (4) auquel il est solidement relié, par exemple au moyen d'une cheville (21), qui peut se connecter à volonté au servomoteur (11) du côté entraînement,
- deux roues dentées (16, 17) déplaçables axialement de concert sont placées sur l'arbre d'entraînement dudit servomoteur (11) pour assurer la connexion de celui-ci au disque (18) ou à la vis sans fin (24) du côté entraînement, lesdites roues dentées (16, 17) étant alternativement en prise avec une couronne dentée (19) montée sur le disque (18) ou avec un pignon (27) situé sur la vis sans fin (24).

2. Dispositif selon la revendication 1,
**caractérisé en ce que**
le disque (18) peut se connecter au servomoteur (11) par le biais de roues dentées qui peuvent s'engrener (16, 17).

3. Dispositif selon la revendication 1,
**caractérisé en ce que**,
pour assurer le pivotement de l'empreinte (5), il est prévu un engrenage à vis sans fin (23) qui est placé dans le bloc d'outillage (4) et que peut entraîner à volonté le servomoteur (11), dont la vis sans fin (24) peut être connectée au servomoteur (11) et dont la roue tangente (26) peut se connecter à l'empreinte (5) du côté entraînement.

4. Dispositif selon la revendication 1,
**caractérisé en ce que**
pour assurer la liaison alternative d'entraînement entre le servomoteur (11) et le bloc à outillage (4) ou l'empreinte (5), un embrayage (31) placé en aval du servomoteur (11) permet de connecter, directement ou au moyen d'organes intermédiaires, le bloc d'outillage(4) ou l'empreinte (5) au servomoteur (11) du côté entraînement.
